# FASCICULE DE BREVET EUROPEEN

(11) **EP 1 265 821 B1**
(45) Date de publication et mention de la délivrance du brevet: **08.12.2004**
(21) Numéro de dépôt: 01917172.7
(22) Date de dépôt: 16.03.2001
(51) Int. Cl.: C03C 13/00, C03C 25/42

(54) **COMPOSITION DE LAINE MINERALE**
MINERALWOLLEZUSAMMENSETZUNG
MINERAL WOOL COMPOSITION

(30) Priorité: 17.03.2000 FR 0003484
(43) Date de publication de la demande: 18.12.2002
(73) Titulaire: SAINT-GOBAIN ISOVER, 92400 Courbevoie (FR)
(72) Inventeur: BERNARD, Jean-Luc, F-60600 Clermont (FR); VIGNESOULT, Serge, F-75018 Paris (FR); LEHUEDE, Patrice, F-93300 Aubervilliers (FR)
(74) Mandataire: Muller, René
(86) Numéro de dépôt international: PCT/FR2001/000805
(87) Numéro de publication internationale: WO 2001/068546

(56) Documents cités:
- WO-A-97/20782
- WO-A-97/21636
- WO-A-97/29057
- FR-A- 2 755 684
- FR-A- 2 783 516
- PATENT ABSTRACTS OF JAPAN vol. 014, no. 397 (C-0752), 28 août 1990 (1990-08-28) -& JP 02 149453 A (NIPPON STEEL CHEM CO LTD), 8 juin 1990 (1990-06-08)
- PATENT ABSTRACTS OF JAPAN vol. 1998, no. 01, 30 janvier 1998 (1998-01-30) -& JP 09 255375 A (NICHIAS CORP), 30 septembre 1997 (1997-09-30)

## Description

La présente invention concerne le domaine des laines minérales artificielles. Elle vise plus particulièrement les laines minérales destinées à fabriquer des matériaux d'isolation thermique et/ou acoustique ou des substrats de culture hors sol. Elle vise notamment des laines minérales stables thermiquement, destinées à des applications où la capacité de résister en température est importante.

Ces laines minérales sont susceptibles de jouer un rôle important dans la résistance au feu de systèmes constructifs auxquels elles sont intégrées.

Elle s'intéresse plus particulièrement aux laines minérales du type laine de roche, c'est-à-dire dont les compositions chimiques entraînent une température de liquidus élevée et une grande fluidité à leur température de fibrage, associées à une température de transition vitreuse élevée.

Conventionnellement, ce type de laine minérale est fibré par des procédés de centrifugation dits " externes ", par exemple du type de ceux utilisant une cascade de roues de centrifugation alimentées en matière fondue par un dispositif de distribution statique, comme décrit notamment dans les brevets EP-0 465 310 ou EP-0 439 385.

Le procédé de fibrage par centrifugation dit " interne ", c'est-à-dire ayant recours à des centrifugeurs tournant à grande vitesse et percés d'orifices, est par contre conventionnellement réservé au fibrage de laine minérale de type laine de verre, schématiquement de composition plus riche en oxydes alcalins et à faible taux d'alumine, de température de liquidus moins élevée et de viscosité à température de fibrage plus grande que la laine de roche. Ce procédé est notamment décrit dans les brevets EP-0 189 354 ou EP-0 519 797.

II a cependant été récemment mis au point des solutions techniques permettant d'adapter le procédé de centrifugation interne au fibrage de laine de roche, notamment en modifiant la composition du matériau constitutif des centrifugeurs et leurs paramètres de fonctionnement. On pourra pour plus de détails à ce sujet se reporter notamment au brevet WO 93/02977. Cette adaptation s'est révélée particulièrement intéressante au sens qu'elle permet de combiner des propriétés qui n'étaient jusque-là inhérentes qu'à l'un ou l'autre des deux types de laine, roche ou verre. Ainsi, la laine de roche obtenue par centrifugation interne est d'une qualité comparable à de la laine de verre, avec un taux d'infibrés moindre que de la laine de roche obtenue conventionnellement. Elle conserve cependant les deux atouts liés à sa nature chimique, à savoir un faible coût de matières chimiques et une tenue en température élevée.

Deux voies sont donc maintenant possibles pour fibrer de la laine de roche, le choix de l'une ou l'autre dépendant d'un certain nombre de critères, dont le niveau de qualité requis en vue de l'application visée et celui de faisabilité industrielle et économique.

A ces critères, s'est ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation.

En outre un nombre important d'application de laines minérales utilise la propriété remarquable de stabilité thermique que présentent certaines compositions de laines minérales. On connaît notamment la stabilité thermique des laines minérales obtenues à partir de basaltes ou de laitiers enrichis en fer.

L'inconvénient de ces compositions a trait, pour le basalte à sa faible dissolution en milieu physiologique, et pour les laitiers enrichis en fer à leur température élevée de fibrage qui limite le procédé de fibrage de ces compositions aux procédés dits " externes ".

Une solution au problème du choix de composition de laine minérale de type roche et à caractère biosoluble consiste dans l'emploi de taux d'alumine élevé et de taux d'alcalins modérés.

Cette solution conduit notamment à des coûts de matières premières élevées, du fait de l'emploi préféré de bauxite.

Le document WO-A-9729057 divulgue des fibres susceptibles de se dissoudre dans un milieu physiologique dont la composition comprend de la silice et de fortes teneurs en alumine et en oxydes alcalins.

Le document WO-A-9720782 divulgue des fibres ayant de faibles teneurs en alumine et en oxydes alcalins auxquelles un revêtement à base de phosphates ou de phosphore confère des propriétés améliorées de résistance aux température élévées ou au feu.

La présente invention a pour but d'améliorer la composition chimique des fibres que comprennent les laines minérales de type roche, amélioration visant notamment à augmenter leur caractère biodégradable avec une capacité à être fibré notamment et avantageusement par centrifugation interne, tout en conservant la possibilité d'obtenir ces compositions avec des matières premières bon marché et à conférer ces laines minérales une excellente stabilité thermique.

On nomme " laine minérale stable thermiquement " ou " présentant une stabilité thermique " une laine minérale susceptible de présenter un caractère de résistance en température, c'est-à-dire susceptible de ne pas s'affaisser de manière substantielle quand elle est chauffée notamment jusqu'à des températures d'au moins 1000°C.

On considère notamment qu'une laine minérale est stable thermiquement si elle répond aux critères définis par le projet de norme " Matériaux isolants : stabilité thermique " (Insulating materials : Thermal stability) tel qu'il est proposé par NORDTEST (NT FIRE XX - NORDTEST REMISS N°1114-93).

Ce test définit une procédure pour déterminer la stabilité thermique d'un échantillon de matériau isolant à une température de 1000°C. Un échantillon de matériau isolant (notamment de 25 mm de hauteur et 25 mm de diamètre) est introduit dans un four qui permet l'observation de l'affaissement de l'échantillon en fonction de la température au contact de l'échantillon.

La température du four croît à 5°C par minute, à partir de la température ambiante, jusqu'à au moins 1000°C.

Ce projet de norme définit un matériau isolant comme stable thermiquement si l'échantillon de ce matériau ne s'affaisse pas de plus de 50% de son épaisseur initiale jusqu'à ce que la température de 1000°C soit atteinte.

L'invention a pour objet une laine minérale susceptible de se dissoudre dans un milieu physiologique, qui comprend des fibres dont les constituants sont mentionnés, ci-après selon les pourcentages pondéraux suivants :

| | | |
|---|---|---|
| SiO₂ | 35-60 %, | de préférence 39-55 % |
| Al₂O₃ | 12-27 %, | -- 16-25% |
| CaO | 0-35%, | -- 3-25 % |
| MgO | 0-30 %, | -- 0-15 % |
| Na₂O | 0-17 %, | -- 6-12 % |
| K₂O | 0-17 %, | -- 3-12 % |
| R₂O (Na₂O + K₂O) | 10-17%, | -- 12-17 % |
| P₂O₅ | 0-5 %, | -- 0-2% |
| Fe₂O₃ | 0-20 %, | |
| B₂O₃ | 0-8%, | -- 0-4% |
| TiO₂ | | 0-3%, |

et qui comprend également un composé du phosphore dont la teneur en phosphore, exprimée sous la forme P₂O₅, varie de 0,2, notamment plus de 0,5 % à 5%, notamment moins de 2 % de la masse totale des fibres, susceptible de réagir à partir de 100°C avec les fibres pour former un revêtement à la surface des fibres.

On a pu en effet constater que, de manière surprenante, les fibres, dont les constituants sont sélectionnés ci-dessus, réagissent avec des composés du phosphore à partir de 100°C et que cette réaction peut se poursuivre quand la température s'accroît. On constate la formation d'un revêtement à la surface des fibres, notamment sur des fibres qui ont été portées à des températures d'environ 1000°C.

Ce revêtement a la propriété remarquable d'être réfractaire et retarde ainsi l'affaissement d'un échantillon de fibres, de la composition sélectionnée, porté à des températures pouvant atteindre 1000°C.

Le composé, fruit de la réaction entre les constituants des fibres et les composés du phosphore, est riche en phosphore. On observe notamment des taux de phosphore compris entre 40 et 60 % atomique, dans ce composé.

Le revêtement observé peut être continu sur la surface d'une fibre et son épaisseur est notamment comprise entre 0,01 et 0,05 µm. Des cristallisations d'une composition proche de celle du revêtement peuvent également être observées localement à la surface des fibres, et peuvent atteindre des épaisseurs de l'ordre de 0,1 à 0,5 µm.

Un effet coopératif est mis en évidence entre les fibres qui ont fait l'objet de la sélection de constituants ci-dessus et des composés du phosphore. On obtient ainsi des laines minérales susceptibles de se dissoudre en milieu physiologique et stables thermiquement.

Selon une variante de l'invention, la laine minérale comprend des fibres dont les constituants sont mentionnés ci-après, selon les pourcentages pondéraux suivants :

| | | |
|---|---|---|
| SiO₂ | 39-55 %, | de préférence 40-52 % |
| Al₂O₃ | 16-27 %, | -- 16-25% |
| CaO | 3-35 %, | -- 10-25 % |
| MgO | 0-15 %, | -- 0-10 % |
| Na₂O | 0-15 %, | -- 6-12 % |
| K₂O | 0-15 %, | -- 3-12 % |
| R₂O ( Na₂O + K₂O) | 10-17 %, | -- 12-17 % |
| P₂O₅ | 0-5 %, | -- 0-2 % |
| Fe₂O₃ | 0-15%, | |
| B₂O₃ | 0-8 %, | -- 0-4 % |
| TiO₂ | 0-3%, | |

et lorsque MgO est compris entre 0 et 5 %, notamment entre 0 et 2 % R₂O ≤ 13,0 %.

Selon un mode de réalisation avantageux de l'invention, la laine minérale comprend des fibres dont les constituants sont mentionnés ci-après, selon les pourcentages pondéraux suivants :

| | | |
|---|---|---|
| SiO₂ | 39-55 %, | de préférence 40-52 % |
| Al₂O₃ | 16-25 %, | -- 17-22 % |
| CaO | 3-35 %, | -- 10-25% |
| MgO | 0-15 %, | -- 0-10% |
| Na₂O | 0-15 %, | -- 6-12 % |
| K₂O | 0-15 %, | -- 6-12% |
| R₂O ( Na₂O + K₂O) | 13,0-17 %, | |
| P₂O₅ | 0-5 %, | -- 0-2 % |
| Fe₂O₃ | 0-15 %, | |
| B₂O₃ | 0-8 %, | -- 0-4% |
| TiO₂ | 0-3%, | |

Dans la suite du texte, on nommera " composition " les plages des constituants des fibres de la laine minérale, ou du verre destiné à être fibré pour produire lesdites fibres.

Dans la suite du texte, tout pourcentage d'un constituant de la composition doit se comprendre comme un pourcentage pondéral et les compositions selon l'invention peuvent comporter jusqu'à 2 ou 3 % de composés à considérer comme des impuretés non analysées, comme cela est connu dans ce genre de composition.

La sélection d'une telle composition a permis de cumuler toute une série d'avantages, notamment en jouant sur les multiples rôles, complexes, que jouent un certain nombre de ses constituants spécifiques.

On a pu constater en effet que l'association d'un taux d'alumine élevé, compris entre 16 et 27 %, de préférence supérieur à 17 % et/ou de préférence inférieur à 25 %, notamment à 22 %, pour une somme d'éléments formateurs, silice et alumine, comprise entre 57 et 75 %, de préférence supérieur à 60 % et/ou de préférence inférieur à 72 %, notamment à 70 %, avec une quantité d'alcalins (R₂O : soude et potasse) élevée comprise entre 10 et 17 %, avec MgO compris entre 0 et 5 %, notamment entre 0 et 2 %, lorsque R₂O ≤ 13.0 %, permet d'obtenir des compositions de verre possédant la propriété remarquable d'être fibrables dans un vaste domaine de température et conférant un caractère biosoluble à pH acide aux fibres obtenues. Selon des modes de réalisation de l'invention, le taux d'alcalin est de préférence supérieur à 12 %, notamment à 13,0 % et même 13,3 % et/ou de préférence inférieur à 15 %, notamment inférieur à 14,5 %.

Ce domaine de compositions s'avère particulièrement intéressant car on a pu observer, que contrairement aux opinions reçues, la viscosité du verre fondu ne baisse pas significativement avec l'augmentation du taux d'alcalins. Cet effet remarquable permet d'augmenter l'écart entre la température correspondant à la viscosité du fibrage et la température de liquidus de la phase qui cristallise et ainsi d'améliorer considérablement les conditions de fibrage et rend notamment possible le fibrage en centrifugation interne d'une nouvelle famille de verres biosolubles.

Selon un mode de réalisation de l'invention, les compositions possèdent des taux d'oxyde de fer compris entre 0 et 5 %, notamment supérieur à 0,5 % et/ou inférieur à 3 %, notamment inférieur à 2,5 %. Un autre mode de réalisation est obtenu avec des compositions qui possèdent des taux d'oxyde de fer compris entre 5 et 12 %, notamment entre 5 et 8 %, ce qui peut permettre d'obtenir une tenue au feu des matelas de laines minérales.

Avantageusement, les compositions suivant l'invention respectent le ratio :
( Na₂O + K₂O )/Al₂O₃ ≥ 0,5, de préférence ( Na₂O + K₂O )/Al₂O₃ ≥ 0,6, notamment (Na₂O + K₂O )/Al₂O₃≥0,7 qui apparaît favoriser l'obtention d'une température à la viscosité de fibrage supérieure à la température de liquidus.

Selon une variante de l'invention, les compositions suivant l'invention ont de préférence un taux de chaux compris entre 10 et 25 %, notamment supérieur à 12 %, de préférence supérieur à 15 % et/ou de préférence inférieur à 23 %, notamment inférieur à 20 %, et même inférieur à 17 % associé à un taux de magnésie compris entre 0 et 5 %, avec de préférence moins de 2 % de magnésie, notamment moins de 1 % de magnésie et/ou un taux de magnésie supérieur à 0,3 %, notamment supérieur à 0,5 %.

Selon une autre variante, le taux de magnésie est compris entre 5 et 10 % pour un taux de chaux compris entre 5 et 15 %, et de préférence entre 5 et 10 %.

Ajouter du P₂O₅, qui est optionnel, à des teneurs comprises entre 0 et 3 %, notamment supérieur à 0,5 % et/ou inférieur à 2 %, peut permettre d'augmenter la biosolubilité à pH neutre. Optionnellement, la composition peut aussi contenir de l'oxyde de bore qui peut permettre d'améliorer les propriétés thermiques de la laine minérale, notamment en tendant à abaisser son coefficient de conductivité thermique dans la composante radiative et également augmenter la biosolubilité à pH neutre. On peut également inclure du TiO₂ dans la composition, de manière optionnelle, par exemple jusqu'à 3 %. D'autres oxydes tels que BaO, SrO, MnO, Cr₂O₃, ZrO₂, peuvent être présents dans la composition, chacun jusqu'à des teneurs de 2% environ.

La différence entre la température correspondant à une viscosité de 10^{2,5} poises (decipascal.seconde), notée T_{log} 2,5 et le liquidus de la phase qui cristallise, notée T_{Liq} est de préférence d'au moins 10°C. Cette différence, T_{log} 2,5⁻ T_{Liq} définit le " palier de travail " des compositions de l'invention, c'est-à-dire, la gamme de températures dans laquelle on peut fibrer, par centrifugation interne tout particulièrement. Cette différence s'établit de préférence à au moins 20 ou 30°C, et même à plus de 50°C, notamment plus de 100°C.

Les compositions suivant l'invention ont des températures de transition vitreuse élevées, notamment supérieures à 600°C. Leur température d'annealing (notée T_{Annealing}, connue également sous le nom de "température de recuisson") est notamment supérieure à 600°C.

Les laines minérales, comme mentionnées plus haut, présentent un niveau de biosolubilité satisfaisant notamment à pH acide. Elles présentent ainsi généralement une vitesse de dissolution, notamment mesurée sur la silice, d'au moins 30, de préférence d'au moins 40 ou 50 ng/cm² par heure mesurée à pH 4,5.

Un autre avantage très important de l'invention a trait à la possibilité d'utiliser des matières premières bon marché pour obtenir la composition de ces verres. Ces compositions peuvent notamment résulter de la fusion de roches, par exemple du type des phonolites, avec un porteur d'alcalino-terreux, par exemple calcaire ou dolomie, complétés si nécessaire par du minerai de fer. On obtient par ce biais un porteur d'alumine à coût modéré.

Ce type de composition, à taux d'alumine et à taux d'alcalins élevés peut être avantageusement fondue dans des fours verriers à flamme ou à énergie électrique.

Selon un mode de réalisation avantageux de l'invention, le revêtement susceptible de se former à la surface des fibres de la laine minérale est constitué essentiellement de phosphate d'alcalino-terreux.

On obtient ainsi des revêtements dont la composition est proche de celle des cristaux de types orthophosphate ou pyrophosphate d'alcalino-terreux dont le point de fusion est connu comme étant supérieur à 1000°C.

Avantageusement, le phosphate d'alcalino-terreux qui est susceptible de se former à la surface des fibres de la laine minérale est un phosphate de chaux.

Les phosphates de chaux, notamment orthophosphate (Ca₃(PO₄)₂, pyrophosphate (Ca₂P₂O₇) sont connus pour être réfractaires et ces composés ont des températures de fusion respectivement de 1670°C, 1230°C.

Selon une variante de l'invention le composé du phosphore susceptible de réagir avec les fibres est un composé qui se décompose à partir de 100°C en libérant de l'acide phosphorique (H₃PO₄, HPO₃... ) et/ou de l'anhydride phosphorique (P₂O₅), sous une forme solide, liquide ou vapeur.

Selon une réalisation préférée, le composé du phosphore est choisi parmi les composés suivants :
- les sels d'ammonium, phosphates d'ammonium, notamment le monohydrogenophosphate (noté MAP), le dihydrogenophosphate (noté DAP), les poly-phosphates (notamment de type méta-, pyro-, poly-phosphates).

Ces sels d'ammonium peuvent être purs ou comprendre des radicaux organiques.
- l'acide phosphorique sous ses diverses formes, notamment, orthophorique (H₃PO₄), métaphosphorique, polyphosphorique ({HPO₃}ₙ)
- les hydrogenophosphates d'aluminium, notamment mono ou dihydrogenophosphates d'aluminium seuls ou mélangés avec de l'acide orthophosphorique.

L'invention concerne également un procédé de fabrication de laine minérale où l'on forme des fibres essentiellement à partir d'oxydes fondus dont les constituants sont mentionnés ci-après, selon les pourcentages pondéraux suivants :

| | | |
|---|---|---|
| SiO₂ | 35-60 %, | de préférence 39-55 % |
| Al₂O₃ | 12-27 %, | -- 16-25 % |
| CaO | 0-35 %, | -- 3-25 % |
| MgO | 0-30 %, | -- 0-15 % |
| Na₂O | 0-17 %, | -- 6-12 % |
| K₂O | 0-17 %, | -- 3-12 % |
| R₂O ( Na₂O + K₂O) | 10-17 %, | -- 12-17 % |
| P₂O₅ | 0-5 %, | -- 0-2 % |
| Fe₂O₃ | 0-20 %, | |
| B₂O₃ | 0-8 %, | -- 0-4 % |
| TiO₂ | 0-3%, | |

et où l'on apporte ensuite, notamment par pulvérisation ou imprégnation d'une solution, un composé du phosphore susceptible de réagir avec les fibres pour former un revêtement à la surface des fibres.

L'invention concerne également l'utilisation de la laine minérale décrite ci-dessus dans des systèmes constructifs résistants au feu.

On appelle « systèmes constructifs résistants au feu » des systèmes, comprenant généralement des assemblages de matériaux, notamment à base de laine minérale et des plaques métalliques, susceptibles de retarder de manière efficace la propagation de la chaleur, ainsi que d'assurer une protection aux flammes et gaz chauds et de conserver une résistance mécanique lors d'un incendie.

Des tests normalisés définissent le degré de résistance au feu, exprimé notamment comme le temps nécessaire pour qu'une température donnée soit atteinte du côté opposé du système constructif soumis à un flux de chaleur, dégagé par exemple par la flamme d'un brûleur ou un four électrique.

On considère qu'un système constructif présente une capacité à résister au feu satisfaisante, notamment s'il est susceptible de répondre aux exigences d'un des essais suivants :
- test pour porte coupe-feu : essais sur plaques de fibres minérales tel que défini dans la norme allemande DIN 18 089-Teil 1.
- comportement au feu de matériau et d'éléments pour la construction tel que défini dans la norme allemande DIN 4102. On considère notamment la norme allemande DIN 4102-Teil 5 pour les tests en grandeur nature afin de déterminer la classe de résistance au feu, et/ou la norme allemande DIN 4102-Teil 8 pour les tests sur échantillons avec un petit banc d'essai.
- test selon l'essai normalisé OMI A 754 (18) qui décrit les exigences générales des essais de résistance au feu pour les applications de type « MARINE », notamment les cloisonnements de bateaux. Ces essais sont pratiqués sur des échantillons de grande taille, avec des fours de 3 m par 3 m. On peut citer, par exemple, le cas d'un pont en acier, où la performance requise dans le cas d'un feu côté isolant est de satisfaire le critère d'isolation thermique pendant au moins 60 minutes.

D'autres détails et caractéristiques avantageuses ressortent de la description ci-après de modes de réalisation préférés non limitatifs.

Le tableau 1 ci-après regroupe les compositions chimiques, en pourcentages pondéraux, de 42 exemples.

Quand la somme de toutes les teneurs de tous les composés est légèrement inférieure ou légèrement supérieure à 100 %, il est à comprendre que la différence avec 100 % correspond aux impuretés/composants minoritaires non analysés et/ou n'est due qu'à l'approximation acceptée dans ce domaine dans les méthodes d'analyse utilisées.

Les compositions selon ces exemples ont été fibrées par centrifugation interne, notamment selon l'enseignement du brevet WO 93/02977 précité.

Leurs paliers de travail, définis par la différence T_{Log 2,5} - T_{Liq} sont largement positifs notamment supérieurs à 50°C, voire même 100°C, et même supérieurs à 150°C.

Toutes ont un rapport (Na₂O + K₂O) /Al₂O₃ supérieur à 0,5 pour un taux d'alumine élevé d'environ 16 à 25 %, avec une somme (SiO₂ + Al₂O₃) assez élevée et un taux d'alcalins d'au moins 10,0 % quand MgO est inférieur ou égal à 5 % et d'au moins 13 % quand MgO est supérieur à 5 %.

Les températures de liquidus sont peu élevées, notamment inférieures ou égales à 1200°C et même 1150°C.

Les températures correspondant à des viscosités de 10^{2,5} poises (T_{Log 2,5}) sont compatibles avec l'utilisation d'assiettes de fibrage haute température notamment dans les conditions d'usage décrites dans la demande WO 93/02977.

Les compositions préférées sont notamment celles où T_{Log 2,5} est inférieur à 1350°C, de préférence inférieur à 1300°C.

On a pu observer que pour les compositions comprenant entre 0 et 5 % de magnésie MgO, notamment avec au moins 0,5 % de MgO et/ou moins de 2 %, voire moins de 1 % de MgO, et entre 10 et 13 % d'alcalins, on obtient des résultats de propriétés physiques, notamment paliers de travail, et de vitesse de dissolution très satisfaisants (cas des exemples : Ex. 18, Ex. 31, Ex. 32, Ex. 33).

Pour illustrer la présente invention, différents composants ont été ajoutés lors du processus de fibrage, par pulvérisation, dans une zone située après la zone d'étirage des fibres à partir du verre fondu, et avant la zone de réception de la laine minérale. On nomme « adjuvants », les composés ajoutés dans cette zone de pulvérisation.

A titre d'exemples, quatre compositions du tableau I, numérotées EX. 4, EX. 33, EX. 41 et EX. 42, ont été fibrées avec et sans présence d'un composé à base de phosphore, pour obtenir des matelas de laine minérale.

Un verre témoin, dont la teneur des éléments se situe hors de la plage sélectionnée pour la présente invention, a également été fibré avec et sans présence d'un composé à base de phosphore. Ce verre est référencé « TEMOIN », et sa composition est la suivante (pourcentage massique) :
SiO₂: 65 %; Al₂O₃: 2,1 %; Fe₂O₃: 0,1 %; CaO: 8,1 %; MgO: 2,4 %; Na₂O : 16,4 % ; K₂O : 0,7% ; B₂O₃ : 4,5 %.

On note que les adjuvants peuvent comprendre des composés apportés simultanément ou de manière séparée. Dans les essais suivants portés dans le tableau II, notés « TEST », l'adjuvant comprend un liant à base de résine et pour certains exemples un composé de phosphore ajouté à ce liant et pulvérisé en même temps que lui. Un essai a été fait en absence de liant, seul le composé de phosphore étant pulvérisé (essai référencé « TEST 14 »).

Les laines minérales obtenues ont été étudiées et on mesure leur masse volumique (mᵥ, exprimée en kg/m³) ainsi que leur stabilité thermique. Pour mesurer la stabilité thermique, des échantillons de laine minérale d'environ 25 mm de hauteur et 25 mm de diamètre ont été prélevés dans les matelas de laine minérale. On mesure l'affaissement de ces échantillons conformément à la procédure définie ci-dessus sous le titre « Matériaux Isolants : stabilité thermique ». On reporte dans le tableau II la valeur du taux d'affaissement mesuré à 1000°C. On nomme « épaisseur relative », l'épaisseur résiduelle de l'échantillon mesuré à une température donnée, rapportée à l'épaisseur initiale de l'échantillon (à température ambiante). On nomme « taux d'affaissement » la valeur : (1-« épaisseur relative »), à la température donnée.

On reporte dans le tableau II les résultats d'essais effectués. Les variables sur les échantillons mesurées sont : la composition des fibres, la masse volumique de la laine minérale (mᵥ), l'adjuvant (type et quantité pulvérisée). Le résultat significatif de la capacité à présenter une stabilité thermique, mesuré et reporté dans le tableau II est le taux d'affaissement à 1000°C.

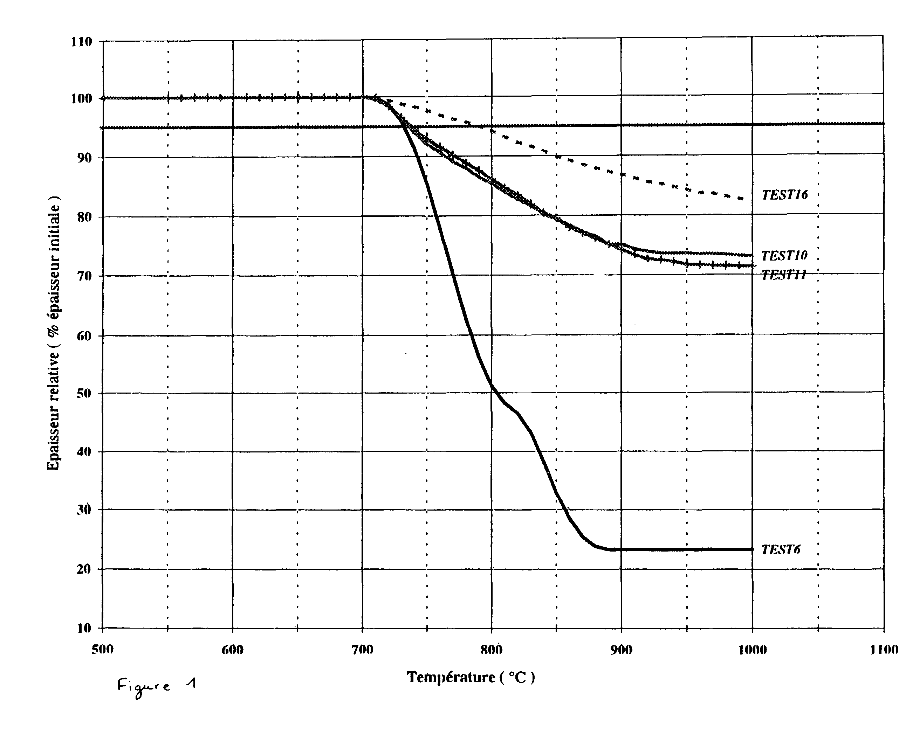

Pour illustrer la méthode de détermination du taux d'affaissement à 1000°C, on représente en figure 1 l'évolution mesurée de l'épaisseur relative d'échantillons de laine minérale en fonction de la température, de 500°C à 1000°C. On constate que l'échantillon référencé «TEST 6 » s'affaisse brutalement à partir de 700°C à 750°C et que l'épaisseur relative est inférieure à 25% à partir de 880°C. On dira qu'un tel échantillon n'est pas stable thermiquement car son taux d'affaissement à 1000°C est de l'ordre de 75%. A la différence de cet échantillon, les échantillons correspondant aux « TEST 10 », « TEST 11 », « TEST 16 » de la figure 1 présentent un affaissement modéré à partir de 700-750°C, puis leur affaissement se stabilise vers 900°C. On dira qu'ils présentent alors un « palier de température ». Ces trois échantillons (« TESTS 10, 11, 16 ») présentent un taux d'affaissement respectivement de 26, 28, 18%. Ce dernier étant inférieur à 50%, on qualifie les laines minérales dans lesquelles les échantillons ont été prélevés de stable thermiquement.

Les adjuvants ajoutés dans la zone de pulvérisation sont de deux ordres :
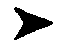 les liants, à base de résine, bien connus dans le domaine des laines minérales. Ces derniers ont pour fonction de donner une résistance mécanique souhaitée au matelas de laine minérale. Deux liants ont été étudiés pour les présents essais : un liant à base de résine formo-phénolique avec de l'urée (liant standard) référence D dans le tableau II, et un liant à base de mélamine référence E dans le tableau II, et connu pour procurer des avantages pour la stabilité thermique ;
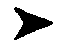 les composés du phosphore dont on démontre l'intérêt pour favoriser ou accroître la stabilité thermique des laines minérales constituées de fibres de composition selon l'invention.

Les composés du phosphore présentés dans le tableau Il sont au nombre de trois :
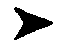 un agent ignifuge non permanent connu sous le nom commercial de « FLAMMETIN UCR-N » et produit par la société THOR CHEMIE. Ce composé est référencé B dans le tableau II. Ce produit est utilisé pour l'apprêt ignifuge de textiles à base de coton, celluloses, polyester. Il comprend des phosphates d'ammonium. On peut estimer l'apport de phosphore exprimé sous la forme P₂O₅, de ce produit de l'ordre de 40% de la masse du produit,
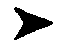 un agent ignifuge connu sous le nom commercial de « FLAMMENTIN TL 861-1 » et produit par la société THOR CHEMIE. Ce composé est référencé A dans le tableau II. Ce produit est constitué d'un mélange d'environ 30 à 40% de FLAMMENTIN UCR-N (A) et d'un composé organique (de type acrylique notamment). L'apport en phosphore, exprimé sous la forme P₂O₅, est de l'ordre de 15 à 20% de la masse du produit. Ces deux produits, A et B, sont destinés à des applications textiles et comprennent également des agents d'expansion, des agents desséchants, (et en très faible quantité, mouillants, dispersants, fixateurs, adoucissants, enzymes). Ils constituent des formules intumescentes, notamment grâce à la formation d'une couche de mousse protectrice.
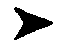 un composé du phosphore référence C dans le tableau II ; le dihydrogenophosphate (noté « DAP »). Ce composé apporte environ 55% en poids de phosphore, exprimé en P₂O₅.
les résultats présentés dans le tableau II permettent de démontrer :
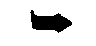 que l'apport d'un composé du phosphore, dont la teneur en phosphore, exprimée en P₂O₅ est comprise entre 0,2 et 5% permet d'obtenir des laines minérales stables thermiquement, dont la composition des fibres correspond à la gamme des teneurs sélectionnées pour la présente invention,
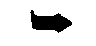 qu'une laine minérale dont la composition des fibres n'est pas comprise dans la plage sélectionnée ne présente pas de stabilité thermique même avec l'apport d'un composé du phosphore dans les teneurs selon l'invention (voir « TEST 2 »),
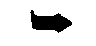 que le taux d'affaissement à 1000°C de la laine minérale, comprenant des fibres selon l'invention, diminue plus la quantité de P₂O₅ augmente. Cependant l'effet du composé du phosphore est très significatif, même à des taux faibles de P₂O₅ : l'apport de P₂O₅ est de l'ordre de 0,5% pour l'essai « TEST 12 », de l'ordre de 0,8% pour les essais « TEST 9 », « TEST 13 », « TEST 26 ». On note également que l'effet du phosphore atteint un seuil vers 2 à 3% de P₂O₅ (comparer « TEST 19 » et « TEST 20 »),
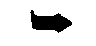 que le liant a très peu d'effet sur la stabilité thermique des laines minérales selon l'invention et que d'excellents résultats sont obtenus, même en absence de liant (« TEST 14 »).

Parmi les avantages de l'invention, on note la possibilité d'utiliser un composé très simple du phosphore qui se différencie des compositions intumescentes. On obtient ainsi un avantage de coût très significatif et on est amené à manipuler beaucoup moins de quantité de matière. On a pu en outre noter que les composés du phosphore qui se décomposent facilement en acide phosphorique sont miscibles avec les liants utilisés classiquement dans l'industrie des laines minérales, permettant ainsi d'effectuer simultanément la pulvérisation d'un liant et l'apport en composé de phosphore susceptible de réagir avec les fibres de verre selon l'invention.

Les échantillons de laine minérale obtenus après essai de stabilité thermique, soit après avoir atteint une température de 1000°C, ont été étudiés.

On remarque que les fibres des échantillons de laine minérale selon l'invention sont relativement préservées et qu'elles n'ont pas fondu.

Des observations par des techniques de micro-analyse, notamment par microscopie électronique à balayage avec analyse élémentaire (par EDX) et par sonde ionique (SIMS) mettent en évidence la présence d'un revêtement quasi continu à la surface des fibres. Ce revêtement a typiquement une épaisseur de 0,01 à 0,05 µm. Sa composition est essentiellement à base de phosphore et de calcium. On a noté la présence de magnésium et/ou de fer pour certains échantillons.

On observe également sur des fibres prélevées après une montée en température jusqu'à 600°C qu'un revêtement du même type existe à des températures inférieures à 1000°C.

Sans vouloir être lié par une théorie scientifique, on peut penser que le composé du phosphore libère à partir de 100°C notamment, de l'acide phosphorique et/ou de l'anhydride phosphorique qui commence à réagir avec les fibres de composition selon l'invention. Dans le cas de ces compositions, le taux élevé d'alcalins qu'elles comprennent peut jouer un rôle de compensateur de charge de l'aluminium, également présent à des taux élevés. On aurait ainsi des compositions où la mobilité atomique des alcalino-terreux est supérieure à celle de ces éléments dans d'autres compositions de verre. Ces alcalino-terreux relativement mobiles, seraient alors susceptibles de réagir avec l'acide phosphorique ou l'anhydride phosphorique pour former un composé réfractaire, notamment un phosphate d'alcalino-terreux, et permettraient ainsi d'assurer une excellente stabilité thermique aux laines minérales selon l'invention.

Les laines minérales selon l'invention conviennent avantageusement pour toutes les applications habituelles des laines de verre et de roche.

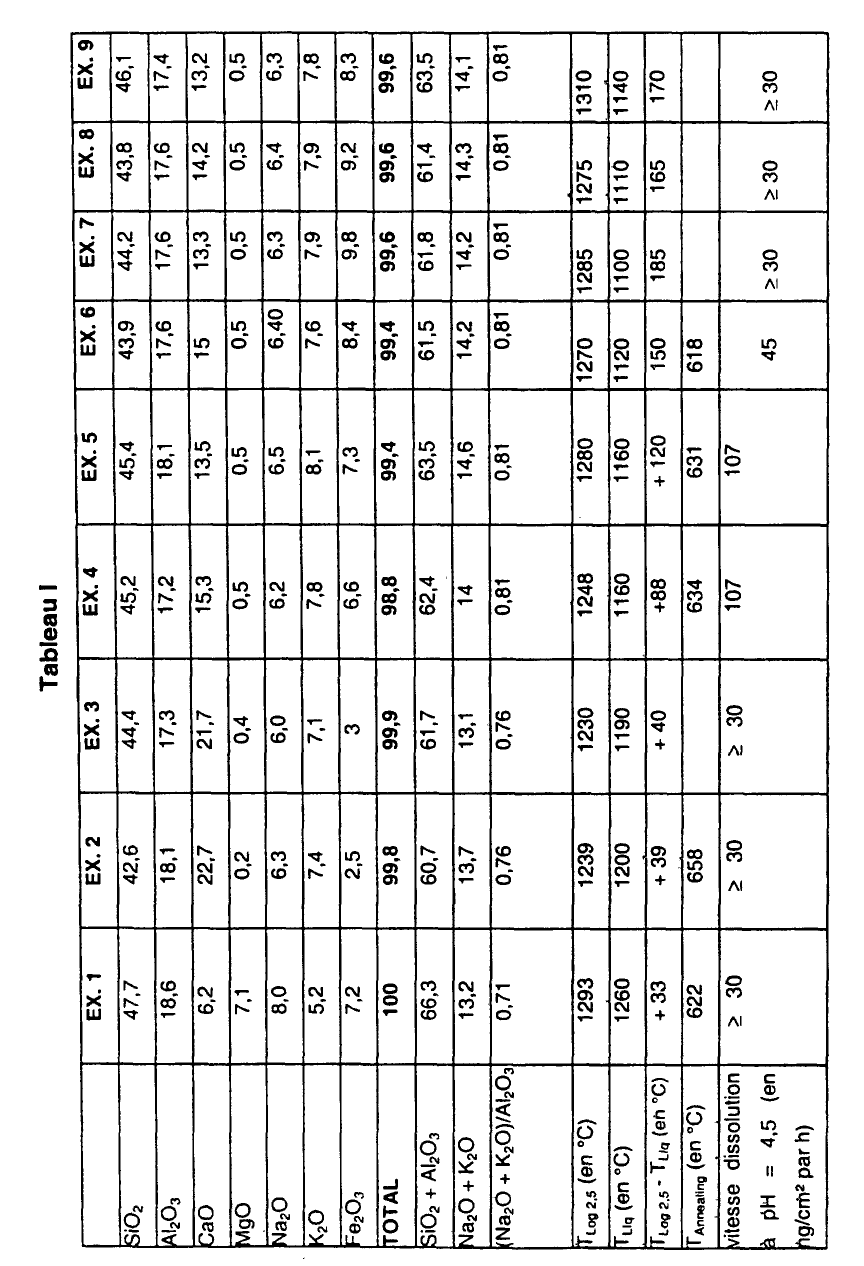

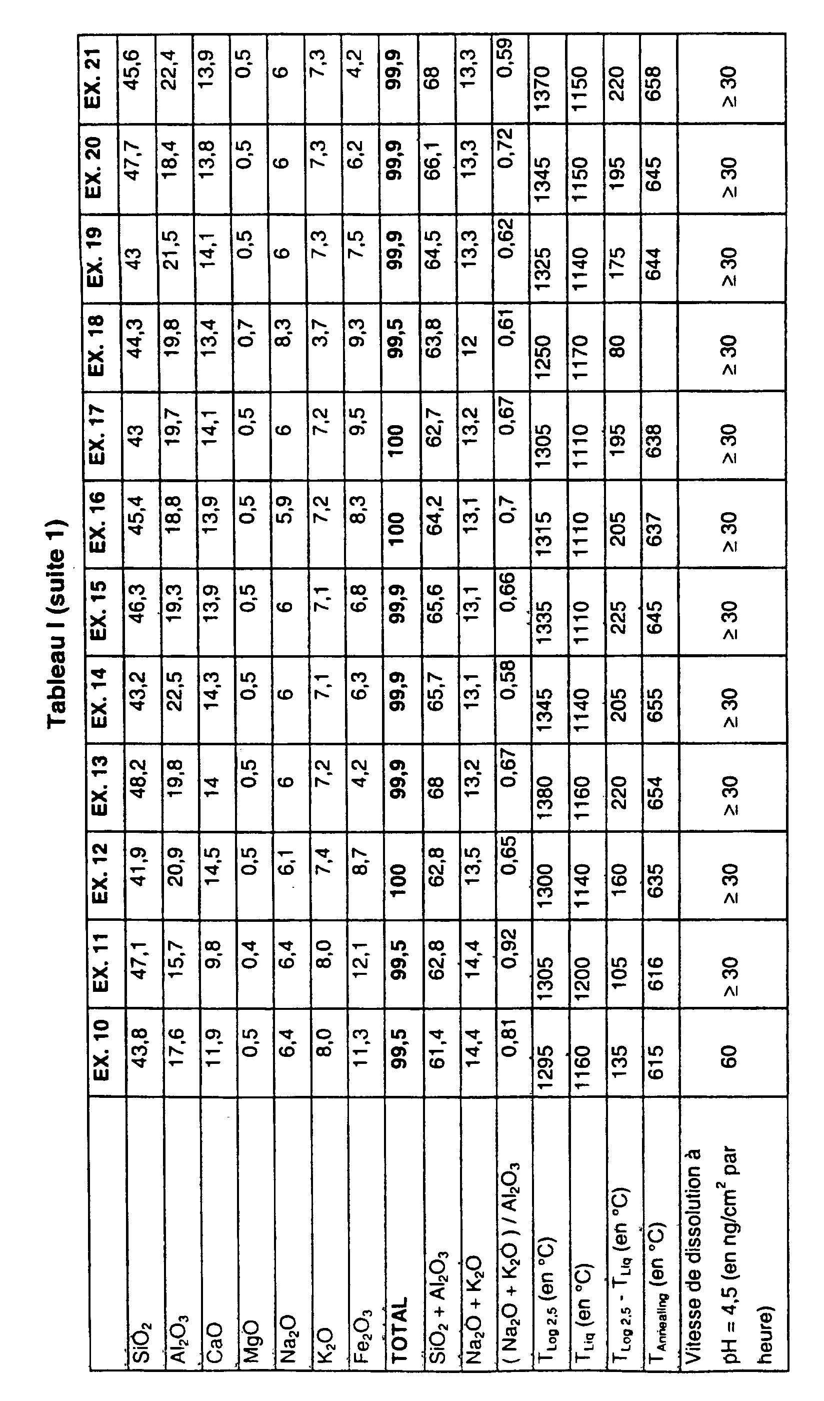

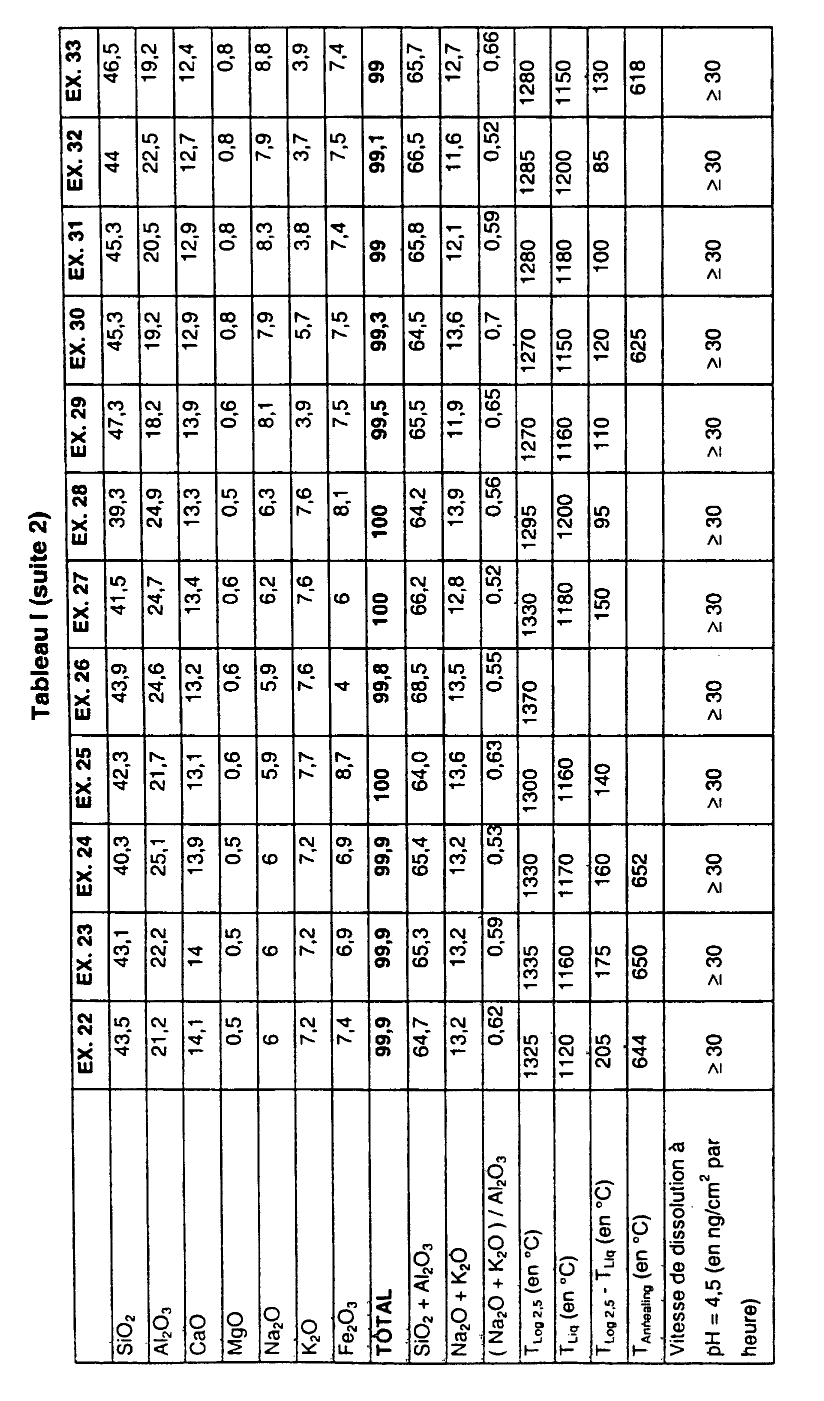

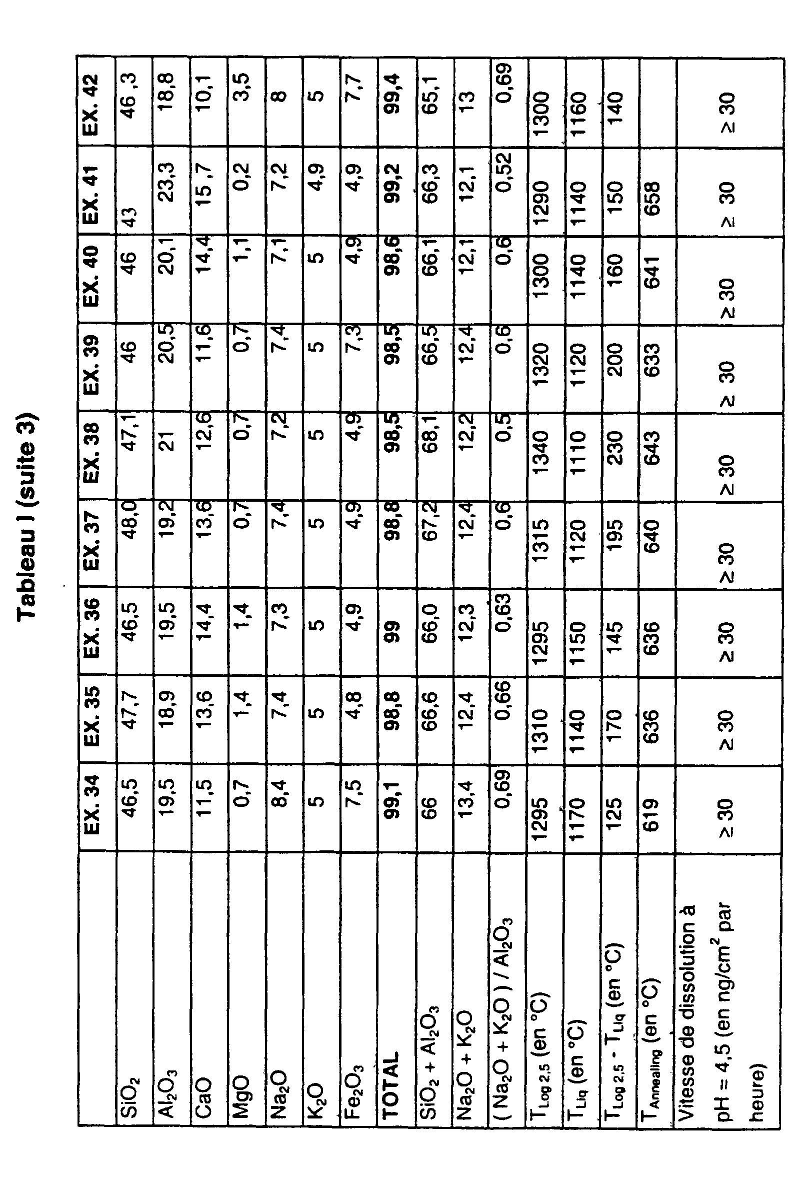

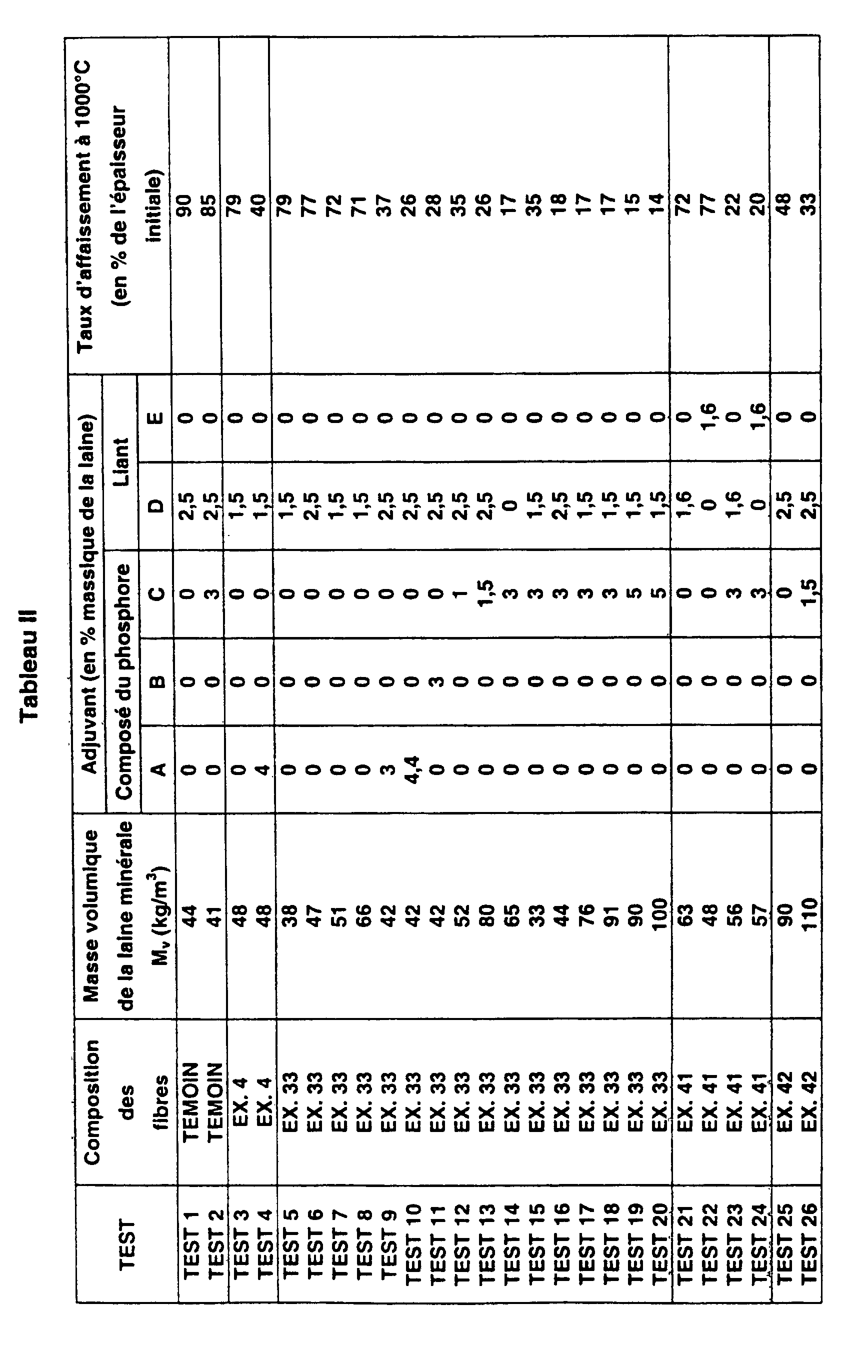

## Revendications

1. Laine minérale, stable thermiquement, susceptible de se dissoudre dans un milieu physiologique, **caractérisée en ce qu'**elle comprend des fibres dont les constituants sont mentionnés ci-après, selon les pourcentages pondéraux suivants :
| | | |
|---|---|---|
| SiO₂ | 35-60 %, | de préférence 39-55 % |
| Al₂O₃ | 12-27 %, | -- 16-25 % |
| CaO | 0-35 %, | -- 3-25 % |
| MgO | 0-30 %, | -- 0-15 % |
| Na₂O | 0-17 %, | -- 6-12 % |
| K₂O | 0-17 %, | -- 3-12 % |
| R₂O ( Na₂O + K₂O) | 10-17 %, | -- 12-17 % |
| P₂O₅ | 0-5 %, | -- 0-2 % |
| Fe₂O₃ | 0-20 %, | |
| B₂O₃ | 0-8 %, | -- 0-4 % |
| TiO₂ | 0-3%, | |
et **en ce qu'**elle comprend un composé du phosphore dont la teneur en phosphore exprimée sous la forme P₂O₅ varie de 0,2, notamment plus de 0,5% à 5%, notamment moins de 2% de la masse totale des fibres, susceptible de réagir à partir de 100°C avec les fibres pour former un revêtement à la surface des fibres

2. Laine minérale selon la revendication 1, **caractérisée en ce qu'**elle comprend des fibres dont les constituants sont mentionnés ci-après, selon les pourcentages pondéraux suivants :
| | | |
|---|---|---|
| SiO₂ | 39-55 %, | de préférence 40-52 % |
| Al₂O₃ | 16-27 %, | -- 16-25 % |
| CaO | 3-35 %, | -- 10-25 % |
| MgO | 0-15 %, | -- 0-10 % |
| Na₂O | 0-15 %, | -- 6-12 % |
| K₂O | 0-15 %, | -- 3-12 % |
| R₂O ( Na₂O + K₂O) | 10-17%, | -- 12-17% |
| P₂O₅ | 0-5 %, | -- 0-2 % |
| Fe₂O₃ | 0-15%, | |
| B₂O₃ | 0-8 %, | -- 0-4 % |
| TiO₂ | 0-3%, | |
**et en ce que** MgO est compris entre 0 et 5 %, notamment entre 0 et 2 %, lorsque R₂O ≤ 13,0 %.

3. Laine minérale selon l'une des revendications précédentes, **caractérisée en ce qu'**elle comprend des fibres dont les constituants sont mentionnés ci-après, selon les pourcentages pondéraux suivants :
| | | |
|---|---|---|
| SiO₂ | 39-55%, | de préférence 40-52 % |
| Al₂O₃ | 16-25 %, | -- 17-22 % |
| CaO | 3-35 %, | -- 10-25 % |
| MgO | 0-15 %, | -- 0-10 % |
| Na₂O | 0-15 %, | -- 6-12 % |
| K₂O | 0-15 %, | -- 6-12 % |
| R₂O ( Na₂O + K₂O) | 13,0-17%, | |
| P₂O₅ | 0-5 %, | -- 0-2 % |
| Fe₂O₃ | 0-15 %, | |
| B₂O₃ | 0-8 %, | -- 0-4% |
| TiO₂ | 0-3%, | |

4. Laine minérale selon les revendications 1 à 3, **caractérisée en ce que** le taux d'alcalins (Na₂O + K₂O) des fibres est compris entre :
13,0 % ≤ R₂O _{≤}15 %, notamment 13,3 % ≤ R₂O ≤ 14,5 %

5. Laine minérale selon l'une des revendications précédentes, **caractérisée en ce que** les teneurs en Fe₂O₃ (fer total) des fibres sont telles que :
0 % ≤ Fe₂O₃ ≤ 5 %, de préférence 0 % ≤ Fe₂O₃ ≤ 3 %, notamment 0,5 % ≤ Fe₂O₃≤ 2,5 %

6. Laine minérale selon l'une des revendications 1 à 4, **caractérisée en ce que** les teneurs en Fe₂O₃ (fer total) des fibres sont telles que :
5 % ≤ Fe₂O₃ ≤ 15 %, notamment 5 % ≤ Fe₂O₃ ≤ 8 %

7. Laine minérale selon l'une des revendications précédentes, **caractérisée en ce que** les compositions des fibres respectent la relation :
( Na₂O + K₂O )/Al₂O₃ ≥ 0,5

8. Laine minérale selon l'une des revendications précédentes, **caractérisée en ce que** les constituants des fibres respectent la relation :
( Na₂O + K₂O )/Al₂O₃ ≥ 0,6, notamment (Na₂O + K₂O )/Al₂O₃ ≥ 0,7

9. Laine minérale selon l'une des revendications précédentes, **caractérisée en ce que** les teneurs en chaux et magnésiedes fibres sont telles que :
10 % ≤ CaO ≤ 25 %, notamment 15 % ≤ CaO ≤ 25 %
et 0 % ≤ MgO ≤ 5 % avec de préférence 0 % ≤ MgO ≤ 2 %, notamment 0 % ≤ MgO ≤ 1%

10. Laine minéraleselon l'une des revendications 1 à 8, **caractérisée en ce que** les teneurs en chaux et magnésie des fibres sont telles que :
5 % ≤ MgO ≤10 % et 5 % ≤ CaO ≤ 15%
avec de préférence 5 % ≤ CaO ≤ 10 %

11. Laine minérale selon l'une des revendications précédentes, **caractérisée en ce que** la teneur en alumine est d'au moins 16%.

12. Laine minérale selon l'une des revendications précédentes, **caractérisée en ce que** les fibres présentent une vitesse de dissolution d'au moins 30 ng/cm² par heure mesurée à pH 4,5 .

13. Laine minérale selon l'une des revendications précédentes, **caractérisée en ce que** le verre correspondant aux fibres peut être fibre par centrifugation interne.

14. Laine minérale selon l'une des revendications précédentes, **caractérisée en ce que** le revêtement susceptible de se former à la surface des fibres est constitué essentiellement de phosphate d'alcalino-terreux.

15. Laine minérale selon la revendication 14, **caractérisée en ce que** le phosphate d'alcalino-terreux est un phosphate de chaux.

16. Laine minérale selon l'une des revendications précédentes **caractérisée en ce que** le composé du phosphore susceptible de réagir avec les fibres est un composé qui se décompose à partir de 100°C en libérant de l'acide phosphorique ou de l'anhydride phosphorique.

17. Laine minérale selon la revendication 16 **caractérisé en ce que** le composé du phosphore est choisi parmi : les phosphates d'ammonium, l'acide phosphorique, les hydrogénophosphates d'ammonium.

18. Procédéde fabrication de laine minérale **caractérisé en ce que** l'on forme des fibres essentiellement à partir d'oxydes fondus dont les constituants sont mentionnés ci-après, selon les pourcentages pondéraux suivants :
| | | |
|---|---|---|
| SiO₂ | 35-60 %, | de préférence 39-55 % |
| Al₂O₃ | 12-27%, | -- 16-25 % |
| CaO | 0-35 %, | -- 3-25 % |
| MgO | 0-30 %, | -- 0-15 % |
| Na₂O | 0-17 %, | -- 6-12 % |
| K₂O | 0-17 %, | -- 3-12 % |
| R₂O ( Na₂O + K₂O) | 10-17 %, | -- 12-17 % |
| P₂O₅ | 0-5 %, | -- 0-2 % |
| Fe₂O₃ | 0-20 %, | |
| B₂O₃ | 0-8 %, | -- 0-4 % |
| TiO₂ | 0-3%, | |
**en ce que** l'on apporte ensuite, notamment par pulvérisation ou imprégnation d'une solution, un composé du phosphore susceptible de réagir avec les fibres pour former un revêtement à la surface des fibres.

19. Utilisation de la laine minérale selon l'une quelconque des revendications 1 à 17 dans des systèmes constructifs résistants au feu.

## Claims

1. Mineral wool which is thermally stable and which is soluble in a physiological medium, **characterised in that** it comprises fibres whose constituents are mentioned below, according to the following percentages by weight:
| | |
|---|---|
| SiO₂ | 35-60%, preferably 39-55% |
| Al₂O₃ | 12-27%, preferably 16-25% |
| CaO | 0-35%, preferably 3-25% |
| MgO | 0-30%, preferably 0-15% |
| Na₂O | 0-17%, preferably 6-12% |
| K₂O | 0-17%, preferably 3-12% |
| R₂O (Na₂O + K₂O) | 10-17%, preferably 12-17% |
| P₂O₅ | 0-5%, preferably 0-2% |
| Fe₂O₃ | 0-20%, |
| B₂O₃ | 0-8%, preferably 0-4% |
| TiO₂ | 0-3%, |
and **in that** it comprises a phosphorus compound whose phosphorus content expressed in the form P₂O₅ varies from 0.2, in particular more than 0.5%, to 5%, in particular less than 2%, of the total mass of the fibres, and which can react from 100°C with the fibres in order to form a coating on the surface of the fibres.

2. Mineral wool according to claim 1, **characterised in that** it comprises fibres whose constituents are mentioned below, according to the following percentages by weight:
| | |
|---|---|
| SiO₂ | 39-55%, preferably 40-52% |
| Al₂O₃ | 16-27%, preferably 16-25% |
| CaO | 3-35%, preferably 10-25% |
| MgO | 0-15%, preferably 0-10% |
| Na₂O | 0-15%, preferably 6-12% |
| K₂O | 0-15%, preferably 3-12% |
| R₂O (Na₂O + K₂O) | 10-17%, preferably 12-17% |
| P₂O₅ | 0-5%, preferably 0-2% |
| Fe₂O₃ | 0-15%, |
| B₂O₃ | 0-8%, preferably 0-4% |
| TiO₂ | 0-3%, |
and **in that** MgO is between 0 and 5%, in particular between 0 and 2% when R₂O ≤ 13.0%.

3. Mineral wool according to any one of the preceding claims, **characterised in that** it comprises fibres whose constituents are mentioned below, according to the following percentages by weight:
| | |
|---|---|
| SiO₂ | 39-55%, preferably 40-52% |
| Al₂O₃ | 16-25%, preferably 17-22% |
| CaO | 3-35%, preferably 10-25% |
| MgO | 0-15%, preferably 0-10% |
| Na₂O | 0-15%, preferably 6-12% |
| K₂O | 0-15%, preferably 6-12% |
| R₂O (Na₂O + K₂O) | 13.0-17%, |
| P₂O₅ | 0-5%, preferably 0-2% |
| Fe₂O₃ | 0-15%, |
| B₂O₃ | 0-8%, preferably 0-4% |
| TiO₂ | 0-3%. |

4. Mineral wool according to claims 1 to 3, **characterised in that** the proportion of alkalines (Na₂O + K₂O) of the fibres is between:
13.0% ≤ R₂O ≤ 15%, in particular 13.3% ≤ R₂O ≤ 14.5%.

5. Mineral wool according to any one of the preceding claims, **characterised in that** the contents of Fe₂O₃ (total iron) of the fibres are such that:
0% ≤ Fe₂O₃ ≤ 5%, preferably 0% ≤ Fe₂O₃ ≤ 3%, in particular 0.5% ≤ Fe₂O₃ ≤ 2.5%.

6. Mineral wool according to any one of claims 1 to 4, **characterised in that** the contents of Fe₂O₃ (total iron) of the fibres are such that:
5% ≤ Fe₂O₃ ≤ 15%, in particular 5% ≤ Fe₂O₃ ≤ 8%.

7. Mineral wool according to any one of the preceding claims, **characterised in that** the compositions of the fibres comply with the relationship:
(Na₂O+K₂O) /Al₂O₃ ≥ 0.5.

8. Mineral wool according to any one of the preceding claims, **characterised in that** the constituents of the fibres comply with the relationship:
(Na₂O+K₂O)/Al₂O₃ ≥ 0.6, in particular (Na₂O+K₂O)/Al₂O₃ ≥ 0.7.

9. Mineral wool according to any one of the preceding claims, **characterised in that** the lime and magnesium contents of the fibres are such that:
10% ≤ CaO ≤ 25%, in particular 15% ≤ CaO ≤ 25%
and 0% ≤ MgO ≤ 5%, preferably with 0% ≤ MgO ≤ 2%, in particular 0% ≤ MgO ≤ 1%.

10. Mineral wool according to any one of claims 1 to 8, **characterised in that** the lime and magnesium contents of the fibres are such that:
5% ≤ MgO ≤ 10% and 5% ≤ CaO ≤ 15%,
preferably with 5% ≤ CaO ≤ 10%.

11. Mineral wool according to any one of the preceding claims, **characterised in that** the content of aluminium is at least 16%.

12. Mineral wool according to any one of the preceding claims, **characterised in that** the fibres have a dissolution rate of at least 30ng/cm² per hour measured at pH 4.5.

13. Mineral wool according to any one of the preceding claims, **characterised in that** the glass which corresponds to the fibres can be drawn into fibres by internal centrifuging.

14. Mineral wool according to any one of the preceding claims, **characterised in that** the coating which can be formed on the surface of the fibres is substantially constituted by alkaline-earth phosphate.

15. Mineral wool according to claim 14, **characterised in that** the alkaline-earth phosphate is a lime phosphate.

16. Mineral wool according to any one of the preceding claims, **characterised in that** the phosphorus compound which can react with the fibres is a compound which decomposes from 100°C releasing phosphoric acid or phosphoric anhydride.

17. Mineral wool according to claim 16, **characterised in that** the phosphorus compound is selected from: ammonium phosphates, phosphoric acid, ammonium hydrogen phosphates.

18. Method for producing mineral wool, **characterised in that** fibres are formed substantially from molten oxides whose constituents are mentioned below, according to the following percentages by weight:
| | |
|---|---|
| SiO₂ | 35-60%, preferably 39-55% |
| Al₂O₃ | 12-27%, preferably 16-25% |
| CaO | 0-35%, preferably 3-25% |
| MgO | 0-30%, preferably 0-15% |
| Na₂O | 0-17%, preferably 6-12% |
| K₂O | 0-17%, preferably 3-12% |
| R₂O (Na₂O + K₂O) | 10-17%, preferably 12-17% |
| P₂O₅ | 0-5%, preferably 0-2% |
| Fe₂O₃ | 0-20%, |
| B₂O₃ | 0-8%, preferably 0-4% |
| TiO₂ | 0-3%, |
and **in that** a phosphorus compound which can react with the fibres in order to form a coating on the surface of the fibres is then introduced, in particular by means of spraying or impregnation with a solution.

19. Use of the mineral wool according to any one of claims 1 to 17 in fire-resistant construction systems.

## Patentansprüche

1. Thermisch stabile, im physiologischen Milieu lösliche Mineralwolle, **dadurch gekennzeichnet, daß** sie Fasern aufweist, welche die nachfolgend genannten Inhaltsstoffe in den folgenden Gewichtsprozentanteilen enthalten:
| | | | |
|---|---|---|---|
| SiO₂ | 35-60%, | bevorzugt | 39-55% |
| Al₂O₃ | 12-27%, | " | 16-25% |
| CaO | 0-35%. | " | 3-25% |
| MgO | 0-30%, | " | 0-15% |
| Na₂O | 0-17%, | " | 6-12% |
| K₂O | 0-17%, | " | 3-12% |
| R₂O (Na₂O + K₂O) | 10-17%, | " | 12-17% |
| P₂O₅ | 0-5%, | " | 0-2% |
| Fe₂O₃ | 0-20%, | | |
| B₂O₃ | 0-8%, | " | 0-4% |
| TiO₂ | 0-3%, | | |
sowie dadurch, daß sie eine Phosphorverbindung aufweist, deren in Form von P₂O₅ ausgedrückter Phosphorgehalt von 0,2, insbesondere mehr als 0,5% bis 5%, insbesondere weniger als 2% der Gesamtmasse der Fasern variiert, wobei diese Phosphorverbindung in der Lage ist, ab 100°C mit den Fasern zu reagieren, um eine Beschichtung auf der Oberfläche der Fasern zu bilden.

2. Mineralwolle nach Anspruch 1, **dadurch gekennzeichnet, daß** sie Fasern aufweist, welche die nachfolgend genannten Inhaltsstoffe in den folgenden Gewichtsprozentanteilen enthalten:
| | | | |
|---|---|---|---|
| SiO₂ | 39-55%, | bevorzugt | 40-52% |
| Al₂O₃ | 16-27%. | " | 16-25% |
| CaO | 3-35%, | " | 10-25% |
| MgO | 0-15%, | " | 0-10% |
| Na₂O | 0-15%, | " | 6-12% |
| K₂O | 0-15%, | " | 3-12% |
| R₂O (Na₂O + K₂O) | 10-17%, | " | 12-17% |
| P₂O₅ | 0-5%, | " | 0-2% |
| Fe₂O₃ | 0-15%, | | |
| B₂O₃ | 0-8%, | " | 0-4% |
| TiO₂ | 0-3%, | | |
sowie dadurch, daß MgO zwischen 0 und 5%, insbesondere zwischen 0 und 2% enthalten ist, wenn R₂O≤ 13,0%.

3. Mineralwolle nach einem der vorhergehenden Ansprüche, **dadurch gekennzeichnet, daß** sie Fasern aufweist, welche die nachfolgend genannten Inhaltsstoffe in den folgenden Gewichtsprozentanteilen enthalten:
| | | | |
|---|---|---|---|
| SiO₂ | 39-55%, | bevorzugt | 40-52% |
| Al₂O₃ | 16-25%, | " | 17-22% |
| CaO | 3-35%, | " | 10-25% |
| MgO | 0-15%. | " | 0-10% |
| Na₂O | 0-15%, | " | 6-12% |
| K₂O | 0-15%, | " | 6-12% |
| R₂O (Na₂O + K₂O) | 13,0-17%, | | |
| P₂O5 | 0-5%. | " | 0-2% |
| Fe₂O₃ | 0-15%, | | |
| B₂O₃ | 0-8%, | " | 0-4% |
| Ti02 | 0-3%, | | |

4. Mineralwolle nach den Ansprüchen 1 bis 3, **dadurch gekennzeichnet, daß** der Alkalianteil (Na₂O + K₂O) der Fasern zwischen 13,0% ≤ R₂O ≤ 15%, insbesondere 13,3% ≤ R₂O ≤ 14,5% liegt.

5. Mineralwolle nach einem der vorhergehenden Ansprüche, **dadurch gekennzeichnet, daß** der Gehalt an Fe₂O₃ (Gesamteisen) der Fasern der folgende ist:
0% ≤ Fe₂O₃ ≤ 5%, bevorzugt 0% ≤ Fe₂O₃ ≤ 3%,
insbesondere 0,5% ≤ Fe₂O₃ ≤ 2,5%.

6. Mineralwolle nach einem der Ansprüche 1 bis 4, **dadurch gekennzeichnet, daß** der Gehalt an Fe₂O₃ (Gesamteisen) der Fasern der folgende ist:
5% ≤ Fe₂O₃ ≤ 15%, insbesondere 5% ≤ Fe₂O₃ ≤ 8%.

7. Mineralwolle nach einem der vorhergehenden Ansprüche, **dadurch gekennzeichnet, daß** die Zusammensetzungen der Fasern die Beziehung erfüllen:
(Na₂O + K₂O) / Al₂O₃ ≥ 0,5

8. Mineralwolle nach einem der vorhergehenden Ansprüche, **dadurch gekennzeichnet, daß** die Inhaltsstoffe der Fasern die Beziehung erfüllen:
(Na₂O + K₂O) / Al₂O₃ ≥ 0,6, insbesondere (Na₂O + K₂O) / Al₂O₃ ≥ 0,7.

9. Mineralwolle nach einem der vorhergehenden Ansprüche, **dadurch gekennzeichnet, daß** der Gehalt der Fasern an Kalk und Magnesium der folgende ist:
10% ≤ CaO ≤ 25%, insbesondere 15% ≤ CaO ≤ 25%,
und 0% ≤ MgO ≤ 5%, bevorzugt 0% ≤ MgO ≤ 2%,
insbesondere 0% ≤ MgO ≤ 1 %.

10. Mineralwolle nach einem der Ansprüche 1 bis 8, **dadurch gekennzeichnet, daß** der Gehalt der Fasern an Kalk und Magnesium der folgende ist:
5% ≤ MgO ≤ 10% und 5% ≤ CaO ≤ 15%,
bevorzugt 5% ≤ CaO ≤ 10%.

11. Mineralwolle nach einem der vorhergehenden Ansprüche, **dadurch gekennzeichnet, daß** der Gehalt an Aluminiumoxid mindestens 16% beträgt.

12. Mineralwolle nach einem der vorhergehenden Ansprüche, **dadurch gekennzeichnet, daß** die Fasern eine Auflösungsrate von mindestens 30 ng/cm² pro Stunde, gemessen bei einem pH-Wert von 4,5, aufweisen.

13. Mineralwolle nach einem der vorhergehenden Ansprüche, **dadurch gekennzeichnet, daß** das den Fasern entsprechende Glas mittels interner Zentrifugierung zerfaserbar ist.

14. Mineralwolle nach einem der vorhergehenden Ansprüche, **dadurch gekennzeichnet, daß** die Beschichtung, die sich auf der Oberfläche der Fasern bilden kann, im wesentlichen aus Erdalkaliphosphat besteht.

15. Mineralwolle nach Anspruch 14, **dadurch gekennzeichnet, daß** das Erdalkaliphosphat ein Calciumphosphat ist.

16. Mineralwolle nach einem der vorhergehenden Ansprüche, **dadurch gekennzeichnet, daß** die Phosphorzusammensetzung, die mit den Fasern reagieren kann, eine Zusammensetzung ist, die sich ab 100°C unter Freisetzung von Phosphorsäure oder Phosphorsäureanhydrid zersetzt.

17. , Mineralwolle nach Anspruch 16, **dadurch gekennzeichnet, daß** die Phosphorzusammensetzung ausgewählt ist unter: Ammoniumphosphaten, Phosphorsäure, Ammoniumhydrogenphosphaten.

18. Verfahren zur Herstellung von Mineralwolle, **dadurch gekennzeichnet, daß** Fasern im wesentlichen ausgehend von erschmolzenen Oxiden gebildet werden, welche die nachfolgend genannten Inhaltsstoffe in den folgenden Gewichtsprozentanteilen enthalten:
| | | | |
|---|---|---|---|
| SiO₂ | 35-60%, | bevorzugt | 39-55% |
| Al₂O₃ | 12-27%, | " | 16-25% |
| CaO | 0-35%, | " | 3-25% |
| MgO | 0-30%, | " | 0-15% |
| Na₂O | 0-17%, | " | 6-12% |
| K₂O | 0-17%, | " | 3-12% |
| R₂O (Na₂O + K₂O) | 10-17%, | " | 12-17% |
| P₂O5 | 0-5%, | " | 0-2% |
| Fe₂O₃ | 0-20%, | | |
| B₂O₃ | 0-8%, | " | 0-4% |
| TiO₂ | 0-3%, | | |
sowie dadurch, daß anschließend insbesondere durch Aufsprühen oder oder Imprägnieren einer Lösung eine Phosphorverbindung eingebracht wird, die mit den Fasern reagieren kann, um eine Beschichtung auf der Oberfläche der Fasern zu bilden.

19. Verwendung der Mineralwolle nach einem der Ansprüche 1 bis 17 in brandhemmenden Baustoffen.
